# EUROPEAN PATENT APPLICATION

(11) **EP 4 852 508 A1**
(43) Date of publication of application: **09.12.2026**
(21) Application number: 25849787.4
(22) Date of filing: 23.09.2025
(51) Int. Cl.: H04W 24/10

(54) **CHANNEL STATE INFORMATION MEASUREMENT METHOD AND APPARATUS**

(30) Priority: 03.04.2025 CN 202510421255
(71) Applicant: China Satellite Network Innovation Co., Ltd, Beijing 100029 (CN)
(72) Inventor: LIU, Sifan, Beijing 100029 (CN); ZHAO, Ying, Beijing 100029 (CN); YU, Wentao, Beijing 100029 (CN); WANG, Yingying, Beijing 100029 (CN); LIU, Yekun, Beijing 100029 (CN)
(74) Representative: Wenzel Nemetzade Warthmüller Patentanwälte Part mbB
(86) International application number: PCT/CN2025/123390
(87) International publication number: WO 2026/208111

(57) **Abstract**

The present disclosure relates to the field of wireless communications, and provides a method and apparatus for measuring channel state information. The method includes: determining, by a network device, a first channel state information (CSI) parameter set when the network device is serving a beam coverage region, and broadcasting the first CSI parameter set to one or more terminal devices within the beam coverage region; calculating, by the terminal device, CSI difference information between the first CSI parameter set and a second CSI parameter set, and transmitting the CSI difference information and a measurement resource request to the network device; transmitting, by the network device, a measurement resource configuration to selected at least one terminal device based on the CSI difference information received from the at least one terminal device; measuring and reporting, by the terminal device, a third CSI parameter set to the network device based on the resource configuration. The present disclosure binds channel state information to the beam coverage region, which may reduce a network measurement frequency and reduce reference signal time-frequency resource occupation and measurement result reporting overheads, thereby saving more time-frequency resources for data transmission.

## Description

### Cross-Reference to Related Application

The present application claims priority to Chinese Patent Application No. 202510421255.3, filed on April 03, 2025 and entitled "method and apparatus for measuring channel state information", which is incorporated herein by reference in its entirety.

### Technical Field

The present disclosure relates to the field of wireless communications, and in particular, to a method and apparatus for measuring channel state information.

### Background

In a non terrestrial network (NTN) scenarios, a satellite with an orbital altitude ranging from 250 kilometers to 2000 kilometers takes approximately 84 to 127 minutes to complete one orbit around the earth. This means that a single satellite can illuminate a certain beam coverage region and provide services to terminal devices in the beam coverage region within a relatively short time. In addition, according to a current standardization direction for the NTN under a 3rd generation partnership project (3GPP), due to the limited capability of the satellite, a small number of beams may be activated simultaneously by the satellite. Therefore, a beam hopping technology needs to be used to enhance downlink coverage. The application of beam hopping will further shorten the service time of a satellite at a beam position.

According to an existing measurement technology, a network side transmits a corresponding reference signal on a configured time-frequency resource, and a terminal device obtains channel state information (CSI) by measuring the reference signal and reports a measurement result to the network side.

### Summary

In an NTN scenario, in view of the relatively short service time of a satellite for a beam coverage region, it means that the satellite has limited communication time-domain resources. If measurement and measurement result reporting are performed frequently, a large number of time-frequency resources will be occupied. Therefore, how to reduce time-frequency resource occupation as much as possible within limited service time, to increase a utilization rate of time-frequency resources is one of the big problems to be solved currently. However, existing measurement and result reporting processes need to occupy a large number of time-frequency resources, which contradicts the foregoing requirement for reducing the time-frequency resource occupation in the NTN scenario. Therefore, there is an urgent need for a method for implementing measurement and reducing measurement overheads.

To solve the above technical problems, the present disclosure provides an apparatus for measuring channel state information, applied to a network device. The apparatus includes a first processing unit; and the first processing unit is configured to control the network device to perform following operations:
determining a first channel state information (CSI) parameter set when the network device is serving a beam coverage region;
broadcasting the first CSI parameter set to one or more terminal devices within the beam coverage region;
receiving CSI difference information report from the one or more terminal devices, wherein the CSI difference information report is determined by the one or more terminal devices based on the first CSI parameter set and a second CSI parameter set obtained by measuring a specific reference signal;
selecting at least one terminal device from the one or more terminal devices based on the CSI difference information report received from the one or more terminal devices, and transmitting a measurement resource configuration to the selected at least one terminal device based on CSI difference information received from the at least one terminal device; and
receiving a third CSI parameter set measured and reported by the selected at least one terminal device based on the measurement resource configuration.

The present disclosure further provides an apparatus for measuring channel state information, applied to a terminal device. The apparatus includes a fourth processing unit, and the fourth processing unit is configured to control the terminal device to perform following operations:
receiving a first channel state information (CSI) parameter set broadcast by a network device, wherein the terminal device is located in a beam coverage region served by the network device;
calculating CSI difference information between the first CSI parameter set and a second CSI parameter set obtained by measuring a specific reference signal; and
in a case where the CSI difference information exceeds a second preset threshold, transmitting the CSI difference information and a measurement resource request to the network device.

In a further embodiment, the apparatus further includes a fifth processing unit, and the fifth processing unit is configured to control the terminal device to perform following operations:
receiving a measurement resource configuration transmitted from the network device; and
performing measurement based on the measurement resource configuration, and transmitting third CSI parameter set report to the network device.

The present disclosure further provides a method for measuring channel state information, applied to a network device and including:
determining a first channel state information (CSI) parameter set when the network device is serving a beam coverage region;
broadcasting the first CSI parameter set to one or more terminal devices within the beam coverage region;
receiving CSI difference information report from the one or more terminal devices, wherein the CSI difference information report is determined by the one or more terminal devices based on the first CSI parameter set and a second CSI parameter set obtained by measuring a specific reference signal;
selecting at least one terminal device from the one or more terminal devices based on the CSI difference information report received from the one or more terminal devices, and transmitting a measurement resource configuration to the selected at least one terminal device based on the CSI difference information received from the selected at least one terminal device; and
receiving a third CSI parameter set measured and reported by the selected at least one terminal device based on the measurement resource configuration.

The present disclosure further provides a method for measuring channel state information, applied to a terminal device and including:
receiving a first channel state information (CSI) parameter set broadcast by a network device, wherein the terminal device is located in a beam coverage region served by the network device;
calculating CSI difference information between the first CSI parameter set and a second CSI parameter set obtained by measuring a specific reference signal; and
in a case where the CSI difference information exceeds a second preset threshold, transmitting the CSI difference information and a measurement resource request to the network device.

In a further embodiment, the method for measuring channel state information applied to the terminal device side further includes:
receiving a measurement resource configuration transmitted from the network device; and
performing measurement based on the measurement resource configuration, and transmitting third CSI parameter set report to the network device.

According to the method and apparatus for measuring channel state information in the present disclosure, by determining the first CSI parameter set (i.e. predicted CSI) when the network device provides the service to the beam coverage region; broadcasting the first CSI parameter set to the one or more terminal devices within the beam coverage region; reporting, by the one or more terminal devices, the CSI difference information (referred to as rough CSI measurement) based on the first CSI parameter set and the second CSI parameter set (i.e. actually measured CSI) obtained by measuring a specific reference signal; selecting, by the network device, the at least one terminal device from the one or more terminal devices based on the CSI difference information report received from the one or more terminal devices, and transmitting the measurement resource configuration to the at least one terminal device based on the CSI difference information received from the at least one terminal device; performing, by the terminal device, measurement based on the measurement resource configuration, and reporting the third CSI parameter set (referred to as accurate CSI measurement) to the network device; and receiving, by the network device, the third CSI parameter set measured and reported by the at least one terminal device based on the measurement resource configuration, channel state information can be bound to the beam coverage region, thus the frequency of network measurement may be reduced, and reference signal time-frequency resource occupation and measurement result reporting overheads may be reduced, thus saving more time-frequency resources for data transmission and indirectly increasing a utilization rate of NTN time-frequency resources.

To make the above and other objectives, features, and advantages of the present disclosure more apparent and understandable, the following will provide preferred embodiments. A detailed explanation is made below in conjunction with the accompanying drawings.

### Brief Description of the Drawings

To describe the technical solutions in the embodiments of the present disclosure or in the related art more clearly, the accompanying drawings for describing the embodiments or the related art will be introduced briefly below. Apparently, the accompanying drawings in the following description are merely some embodiments of the present disclosure, and a person of ordinary skill in the art may still obtain other drawings from the accompanying drawings without paying creative efforts.
FIG. 1 shows a structural diagram of a satellite communication system according to an embodiment of the present disclosure;
FIG. 2 shows a schematic diagram of processes of creating, using, updating, and maintaining first time-scale CSI and second time-scale CSI according to an embodiment of the present disclosure;
FIG. 3 shows a schematic diagram of setting of a satellite beam position in an NTN scenario according to an embodiment of the present disclosure;
FIG. 4 shows a schematic diagram of a process for measuring channel state information according to an embodiment of the present disclosure;
FIG. 5 shows a flowchart of a method for measuring channel state information applied to a network device side according to an embodiment of the present disclosure;
FIG. 6 shows a flowchart of a method for measuring channel state information applied to a terminal device side according to an embodiment of the present disclosure;
FIG. 7 shows a structural diagram of an apparatus for measuring channel state information applied to a network device side according to an embodiment of the present disclosure;
FIG. 8 shows another structural diagram of an apparatus for measuring channel state information applied to a network device side according to an embodiment of the present disclosure;
FIG. 9 shows another structural diagram of an apparatus for measuring channel state information applied to a network device side according to an embodiment of the present disclosure;
FIG. 10 shows a structural diagram of an apparatus for measuring channel state information applied to a terminal device side according to an embodiment of the present disclosure;
FIG. 11 shows another structural diagram of an apparatus for measuring channel state information applied to a terminal device side according to an embodiment of the present disclosure;
FIG. 12 is a schematic diagram of a terminal device according to an embodiment of the present disclosure; and
FIG. 13 is a schematic diagram of a network device according to an embodiment of the present disclosure.

### Detailed Description of the Embodiments

The technical solutions in embodiments of the present disclosure will be clearly and completely described in the following with reference to the accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without paying creative efforts shall fall within the protection scope of the present disclosure.

The terms "first", "second", etc. in the specification and claims of the present disclosure and the above accompanying drawings are defined to distinguish similar objects, and do not have to be used to describe a specific order or sequence. Such used data is interchangeable where appropriate, so that the embodiments of the present disclosure described here can be implemented in an order other than those illustrated or described here. In addition, the terms "include/comprise", "have/has", and any of their variations are intended to cover non-exclusive inclusion. For example, a process, a method, an apparatus, a product, or a device that includes a series of steps or units is not limited to those clearly listed steps or units, but may also include other steps or units not explicitly listed or inherently present for these processes, methods, products, or devices.

In the description of this specification, unless otherwise stated, the term "and/or" only describes an association relationship for describing associated objects, representing that three relationships may exist. For example, A and/or B may represent three situations: A exists alone; A and B exist simultaneously; and B exists alone. A and B may be singular or plural. Furthermore, in the description of the present disclosure, unless otherwise stated, "a/the plurality of" means two or more. The term "at least one of the following items" or its similar expression means any combination of these items, including any combination of a single item or a plurality of items. For example, at least one of a, b, or c may represent: a, b, c, a-b, a-c, b-c, or a-b-c, where a, b, and c may be singular or plural.

In this specification, the expression "greater than or less than" may be used to determine whether a specific condition is satisfied. However, this is only for illustrative purposes of an example and does not intend to exclude the above or following descriptions. The condition recorded as "above" may be replaced with "greater than". The condition recorded as "below" may be replaced with "less than". The conditions recorded as "above and below" may be replaced with "greater than and less than". Moreover, "A" to "B" represents at least one element from A (including A) to B (including B).

In the embodiments of the present disclosure, the singular forms such as "a" and "the" include plural forms and should be broadly interpreted as "a kind of" or "a type of" rather than being limited to a meaning of "one". In addition, the term "the" should be understood to include both a singular form and a plural form, unless otherwise explicitly specified in the context. In addition, the term "according to" should be understood as "at least partially according to", and the term "based on" should be understood as "at least partially based on", unless otherwise explicitly specified in the context.

Although this specification provides operation steps of the method as described in the embodiments or flowcharts, more or fewer operation steps may be included based on routine or non-inventive labors. The order of the steps set forth in the embodiments is merely a way of many step performing orders and does not represent the only order of performing the steps. When an actual system or apparatus product performs the steps, the steps may be performed according to the method order shown in the embodiments or the accompanying drawings or in parallel.

It should be noted that, in the embodiments of the present disclosure, existing industry solutions such as software, components, and models may be mentioned, and they should be regarded as exemplary and are solely intended to illustrate the feasibility of implementing the technical solutions of the present disclosure, but do not imply that the applicant has used or will necessarily use such solutions.

The present disclosure uses terms that are used in some communication standards (e.g., the 3rd generation partnership project (3GPP), the European Telecommunications Standards Institute (ETSI), the Extensible Radio Access Network (ERAN), and the Open-Radio Access Network (O-RAN)) to describe various embodiments, but this is merely an illustrative example. Various embodiments of the present disclosure may also be easily transformed and applied in other communication systems.

In the embodiments of the present disclosure, communication between devices in a communication system may be carried out according to any stage of communication protocol, such as, including but not limited to the following communication protocols: first generation (1G), 2G, 2.5G, 2.75G, 3G, 4G, 4.5G, 5G, new radio (NR), and/or other currently known or future-developed communication protocols.

For ease of understanding, the technical terms in the embodiments of the present disclosure will be explained below.
(1) Terminal device refers to a device which has a wireless transmission and reception function and can cooperate with a network device to provide communication services to users. The terminal device may also be referred to as a terminal, a user equipment (UE), a user terminal, a mobile terminal (MT), a user agent, or the like. For example, the terminal device may be a mobile phone, a tablet, a laptop, a wearable device, a virtual reality (VR) device, an augmented reality (AR) device, a wireless communication device, a wireless terminal in industrial control, a wireless terminal in self driving, a wireless terminal in remote medical surgery, a wireless terminal in smart grids, a wireless terminal in transportation safety, a wireless terminal in smart cities, a wireless terminal in smart homes, and an Internet of Things (IoT) device, a narrowband Internet of Things (NB IoT) device, a Vehicle-to-everything (V2X) device, a device-to-device communication (D2D) device, an enhanced machine type communication (eMTC) device, a reduced capability (RedCap) device, a cellular phone, a cordless phone, a session initiation protocol (SIP) phone, a wireless local loop (WLL) station, a personal digital assistant (PDA), a client, a handheld device with a wireless communication function, an in-vehicle or onboard device, or the like.
   In scenarios such as the IoT, the terminal device may also be a machine or apparatus for monitoring or measuring, which include but is not limited to: a machine type communication (MTC) terminal, an in-vehicle communication terminal, a device-to-device terminal, a machine-to-machine (M2M) terminal, and the like.
(2) Network device refers to a network side device that can communicate with a terminal device. The network device may be located on a satellite or on the ground. The network device may also be referred to as a space base station, a satellite-borne base station, a satellite, a satellite communication node, a satellite network terminal device, a satellite communication module, a base station, or the like. The network side device may also be referred to as an access network device or a radio access network device. The network side device may be a base transceiver station (BTS) in a global system for mobile communication (GSM) or a code division multiple access (CDMA) communication system carried by a satellite, a NodeB (NB) in a wideband code division multiple access (WCDMA) system carried by a satellite, an evolved NodeB (eNB or eNodeB) in an LTE system carried by a satellite, a base station in a terrestrial or non-terrestrial network (NTN), such as a gNB in a 5G network carried by a satellite, a base station in a future network (such as a 6G network), after the 5G network, carried by a satellite, a base station in a future evolved public land mobile network (PLMN) carried by a satellite, a transmission reception point (TRP) carried by a satellite, a wireless controller in a cloud radio access network (CRAN) scenario carried by a satellite, or a city base station, micro base station, pico base station, or femto base station carried by a satellite. A base station may be a ground base station capable of communicating with a satellite, or may be referred to as an access point (AP), a 5th (5G) generation node, or a wireless point, a transmission/reception point (TRP), the latter has other terms with equivalent technical meanings. The network device may also be a base station device carried by a high altitude platform station (HAPS) with a hovering capability such as a large balloon and an airship, a base station device in a roadside unit (RSU), or a base station device in an Internet of vehicle (IoV).

Both a terminal device and a base station device can perform beamforming, but the embodiments of the present disclosure are not limited to this. In some embodiments, a terminal may or may not perform beamforming. Furthermore, the base station may or may not perform beamforming. That is, only one of the terminal and the base station can perform beamforming, or both the terminal and the base station may not perform beamforming. In the present disclosure, beam refers to spatial flowing of a signal in a wireless channel, which is formed by more than one antenna or antenna unit. This formation process can be referred to as beamforming.

In addition, the term "network side" or "network device side" refers to network, which may be a base station or may include one or more network devices as described above. The term "terminal side" or "terminal device side" refers to user or terminal, which may be a UE or may include one or more terminal devices as described above.

According to the 3GPP TS38.215 and TS38.331 protocols, an existing measurement mechanism is that a network side configures measurement resources and transmits reference signals based on the configuration. The reference signals include, for example, a synchronization signal block (SSB) and a channel state information reference signal (CSI-RS). A terminal device receives the reference signals based on the configuration and obtains CSI by measuring the reference signals. Then, the terminal device reports a measurement result (including the CSI) to the network side through uplink control information (UCI). The network side indicates subsequent operations based on the measurement result.

In an NTN scenario, in view of the relatively short service time of a satellite for a beam coverage region, it means that the satellite has limited communication time-domain resources. If measurement and measurement result reporting are performed frequently, a large number of time-frequency resources will be occupied. Therefore, how to reduce occupation on time-frequency resource as much as possible within a limited service time, thereby increasing a utilization rate of time-frequency resources is one of the big problems to be solved currently. However, according to an existing measurement technology, a network side transmits a corresponding reference signal on a configured time-frequency resource, and a terminal device obtains CSI by measuring the reference signal and reports a measurement result to the network side. This measurement and result report process needs to occupy a large number of time-frequency resources. This contradicts the requirement of the foregoing NTN scenario. Therefore, to reduce measurement overheads, a measurement mechanism in the NTN scenario needs to be adjusted based on NTN channel characteristics.

### First embodiment

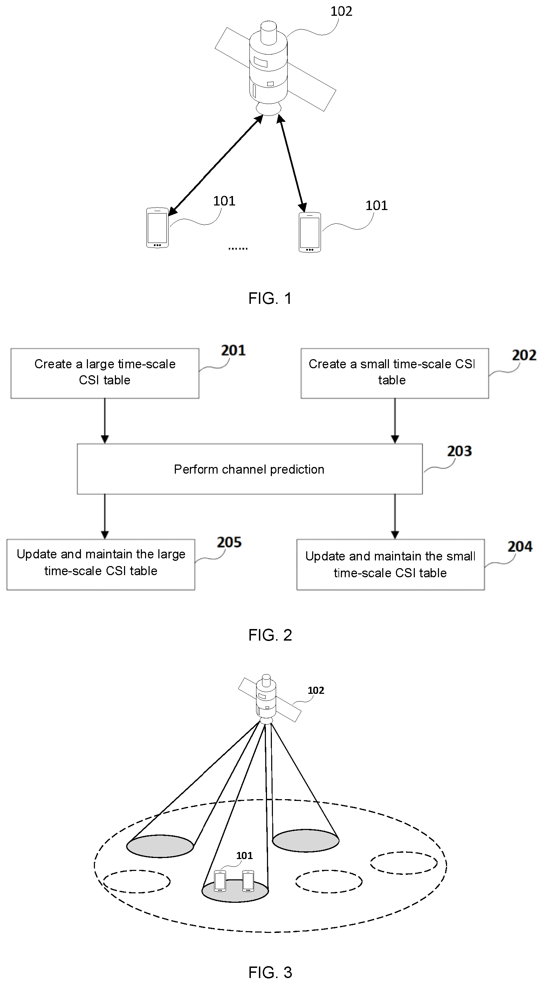

A first aspect of the present disclosure provides a satellite communication system. As shown in FIG. 1, the satellite communication system includes: a terminal device 101 and a network device 102.

When providing a service to a beam coverage region, the network device 102 performs the following operations: predicting a first CSI parameter set; broadcasting the first CSI parameter set to one or more terminal devices within the beam coverage region; receiving CSI difference information report from the one or more terminal devices; selecting at least one terminal device from the one or more terminal devices based on the CSI difference information report received from the one or more terminal devices, and transmitting measurement resource configuration to the at least one selected terminal device based on CSI difference information received from the at least one selected terminal device; and receiving a third CSI parameter set measured and reported by the at least one selected terminal device based on the measurement resource configuration.

During specific implementation, the network device 102 selects at least one or more terminal devices from terminal devices that report CSI difference information, configures measurement resources for the one or more selected terminal devices based on the CSI difference information of the one or more selected terminal devices, and transmits reference signals based on configurations; and receives the third CSI parameter set measured and reported by the one or more selected terminal devices based on the reference signals.

The terminal device 101 is configured to: receive the first CSI parameter set broadcast by the network device 102, where the terminal device 101 is located in the beam coverage region in which the network device 102 provides service; calculate CSI difference information between the first CSI parameter set and a second CSI parameter set obtained by measuring a specific reference signal; transmit the CSI difference information and a measurement resource request to the network device 102 in a case where the CSI difference information exceeds a second preset threshold; receive the measurement resource configuration transmitted from the network device 102; and perform measurement based on the measurement resource configuration, and transmit a third CSI parameter set report to the network device 102.

According to this embodiment, by determining the first CSI parameter set (i.e. predicted CSI) when the network device provides the service to the beam coverage region; broadcasting the first CSI parameter set to the one or more terminal devices within the beam coverage region; reporting, by the one or more terminal devices, the CSI difference information (referred to as rough CSI measurement) based on the first CSI parameter set and the second CSI parameter set (i.e. actually measured CSI) obtained by measuring the specific reference signal; selecting the at least one terminal device from the one or more terminal devices based on the CSI difference information report received from the one or more terminal devices, and transmitting a configured measurement resource to the at least one selected terminal device based on the CSI difference information received from the at least one selected terminal device; performing, by the terminal device, measurement based on the measurement resource configuration, and reporting the third CSI parameter set (referred to as accurate CSI measurement) to the network device; and receiving, by the network device, the third CSI parameter set measured and reported by the at least one selected terminal device based on the measurement resource configuration, channel state information may be bound to the beam coverage region, frequency of network measurement may be reduced, and reference signal time-frequency resource occupation and measurement result reporting overheads may be reduced, thus saving more time-frequency resources for data transmission and indirectly increasing a utilization rate of NTN time-frequency resources.

The specific reference signal is, for example, an SSB and a CSI-RS. The CSI difference information is obtained by calculating a difference between the first CSI parameter set and the second CSI parameter set.

The second preset threshold may be determined based on a maximum CSI difference that meets requirements for physical channel link margin and data communication quality. The second preset threshold may have other representation types and values.

Beam refers to an electromagnetic beam used for spatially directional transmission or reception of signals through an antenna array, and it is typically associated with one or more reference signals. A beam coverage region is referred to as a beam position. A beam position refers to a geographic range that is divided in advance based on a size of a satellite beam and is covered by a single beam. In the subsequent embodiments, unless otherwise specified, a beam position refers to a beam coverage region.

The following is a specific embodiment to explain a process of determining the first CSI parameter set:
As described in 3GPP TR38.811, an NTN channel is highly related to large-scale fading, and accurate NTN channel information can be directly calculated based on a satellite elevation angle and large-scale fading information. A satellite elevation angle for a satellite for a beam position is calculated based on current ephemeris information of the satellite.

In addition, as described in 3GPP TR38.811NTN, a large number of parameters related to large-scale fading in a channel are related to geographic factor information such as a ground obstacle type, an obstacle density, an altitude, and a latitude. Channel fading probability distribution models corresponding to different geographic factor information are determined by performing actual measurement on geographic factor information of different geographic positions. A prior CSI fading parameter of each beam position is calculated and stored based on geographic factor information of the beam position and a corresponding channel fading probability distribution model, thereby forming the first time-scale CSI. The first time-scale CSI varies slowly or even remains unchanged over time.

Specifically, the first time-scale CSI at least includes: prior CSI fading parameters of respective beam positions, respective operating frequency bands, and a satellite elevation angle, or levels of the prior CSI fading parameters; and/or channel fading probability distribution models of respective beam positions.

The prior CSI fading parameters of respective beam positions, respective operating frequency bands, and the satellite elevation angle are calculated based on geographic factor information and line of sight (LoS) probabilities of respective beam positions, and/or are calculated based on the channel fading probability distribution models of respective beam positions.

The channel fading probability distribution models of respective beam positions are derived based on channel fading parameters and LoS probabilities of respective operating frequency bands and a satellite elevation angle that are measured under geographic position information of respective beam positions.

In addition, as described in 3GPP TR38.811, some parameters related to large-scale fading in an NTN channel are also affected by meteorological factor information. By recording a difference between an actually measured value of historical channel fading at the same position and a CSI parameter at this position in the first time-scale CSI, second time-scale CSI is formed, which reflects the impact of the meteorological factor information on the CSI fading parameters.

Specifically, the second time-scale CSI at least includes: differences between historical actually measured CSI fading parameters of respective beam coverage regions, respective operating frequency bands and a satellite elevation angle, and prior CSI fading parameters of the respective beam coverage regions, the respective operating frequency bands and the satellite elevation angle, or difference levels between the historical actually measured CSI fading parameters and the prior CSI fading parameters.

Specifically, the first CSI parameter set may be determined in the following manner:
Manner I: determine the first CSI parameter set based on the impact of the geographic factor information and the meteorological factor information on channel fading, as CSI is affected by the geographic factor information and the meteorological factor information. Specifically, the geographic factor information includes but is not limited to a ground obstacle type, an obstacle density, an altitude, and a latitude. The meteorological factor information includes but is not limited to atmospheric absorptivity, cloud and rain fading, ionospheric scintillation, and tropospheric scintillation.
Manner II: Calculate the first CSI parameter set based on the first time-scale CSI, the second time-scale CSI, ephemeris information and an operating frequency band of a satellite that carries the network device.

The first time-scale CSI is determined based on invariant impact of the geographic factor information on channel fading. The second time-scale CSI is determined based on severe impact of the meteorological factor information on channel fading. For information specifically contained in the first time-scale CSI and the second time-scale CSI, reference may be made to the above paragraphs.

In some implementations, the calculating the first CSI parameter set when the network device provides the service to the beam position includes based on the first time-scale CSI, the second time-scale CSI, the ephemeris information and the operating frequency band of the satellite that carries the network device includes:
calculating a satellite elevation angle based on the ephemeris information of the satellite that carries the network device; obtaining a target prior CSI fading parameter from the first time-scale CSI based on the beam position, the operating frequency band, and the satellite elevation angle; obtaining a target difference from the second time-scale CSI based on the beam coverage region, the operating frequency band, and the satellite elevation angle; predicting large-scale fading information based on the target prior CSI fading parameter and the target difference; and calculating the first CSI parameter set based on the predicted large-scale fading information and an NTN channel model. The description of the NTN channel model may refer to 3GPP TR38.811.

The predicting large-scale fading information based on the target prior CSI fading parameter and the target difference includes: at least performing weighted summation processing on the target prior CSI fading parameter and the target difference to obtain the large-scale fading information. During implementation, a weight of weighted summation may be determined based on actual quality of service in a historical service process.

In some embodiments of the present disclosure, the network device 102 further performs the following operations:
(1) updating the second time-scale CSI based on the beam position, an operating frequency band of the at least one selected terminal device, and the third CSI parameter set reported by the at least one selected terminal device.

In some implementations, an implementation process of this step includes: performing smoothing filtering processing on the third CSI parameter set reported by the at least one selected terminal device; at least performing weighted averaging processing on the smoothing filtered CSI parameter set; determining at least one item to be updated based on the beam coverage region, the operating frequency band of the at least one selected terminal device, and the satellite elevation angle; and using the weighted averaged CSI parameter as a historical actually measured CSI fading parameter of the at least one item to be updated, recalculating a difference value of the at least one item to be updated, and updating the at least one item to be updated in the second time-scale CSI by using the difference value of the at least one item to be updated.

In some implementations, step (1) further includes: triggering timing when a difference or difference level in the second time-scale CSI exceed a first preset threshold; resetting timing when the difference or the difference level in the second time-scale CSI is within the first preset threshold; and triggering updating of the first time-scale CSI in a case where timing exceeds preset duration.

The first preset threshold and the preset duration are determined based on meteorological prior information of a beam position.

The updating of the first time-scale CSI includes: at least performing weighted summation processing on data of related items in the first time-scale CSI and data of related items in the second time-scale CSI; and updating the data of the related items in the first time-scale CSI by using data obtained by performing the weighted summation processing.

(2) determining a fourth CSI parameter set based on updated second time-scale CSI, the first time-scale CSI, the ephemeris information and the operating frequency band of the satellite that carries the network device; or determining the fourth CSI parameter set based on the third CSI parameter set reported by the at least one selected terminal device.
the determining the fourth CSI parameter set based on the updated second time-scale CSI, the first time-scale CSI, the ephemeris information and the operating frequency band of the satellite that carries the network device may refer to the process of determining the third CSI parameter set based on the second time-scale CSI, the first time-scale CSI, the ephemeris information and the operating frequency band of the satellite that carries the network device.

The fourth CSI parameter set may be obtained by performing the averaging processing on the third CSI parameter set reported by the at least one selected terminal device.

(3) determining signal transmission configuration information based on the fourth CSI parameter set.

The signal transmission configuration information at least includes: modulation and coding scheme (MCS), coding rate, time-frequency resources, a number of transmission layers, precoding matrix indicator (PMI), transmission mode, a bandwidth part (BWP) configuration, a reference signal configuration, a power control parameter, and the like.

(4) transmitting the signal transmission configuration information to terminal devices in a same frequency band within the beam position.

The first time-scale CSI may be represented by a large time-scale table, and the second time-scale CSI may be represented by a small time-scale table. The following will describe processes of creating, using, updating, and maintaining a large time-scale CSI table and a small time-scale CSI table through a specific embodiment.

The processes of creating, using, updating, and maintaining the large time-scale CSI table and the small time-scale CSI table are shown in FIG. 2. Step 201 and step 202 in FIG. 2 are flows that need to be carried out before the network device starts a service. Remaining steps represent CSI measurement related flows that need to be carried out in an actual service process of the network device, which specifically includes:
201: Create a large time-scale CSI table:
Large-scale fading is mainly affected by factors such as free space path loss, shadow fading, clutter loss, atmospheric absorptivity, cloud and rain fading, ionospheric scintillation, and tropospheric scintillation. Among these impact factors, parameters such as the shadow fading, the clutter loss, the atmospheric absorptivity, and the ionospheric scintillation are closely related to geographic factors such as a geomorphic feature, a ground obstacle type, an obstacle density, an altitude, and a latitude. A geographic factor related LoS probability and large-scale fading parameters of respective beam positions covered by the network device are stored as the large time-scale CSI table.

The large time-scale CSI tables for respective beam positions may also be created based on channel fading probability distribution models corresponding to different geographic factor information, in conjunction with actual geographic information of respective beam positions, to indicate basic large-scale fading parameters of respective beam positions related to geographic factors.

Further, the stored parameters may be quantified into fading levels with different granularities based on actual quality-of-service requirements of different beam positions, where each fading level corresponds to a specific fading parameter range.

202: Create a small time-scale CSI table:
As described in 3GPP TR38.811, in addition to the geographic factors, the large-scale fading of the NTN channel is also closely related to meteorological factors, and the degree of change in meteorological conditions over time is more severe than that in the geographic factors. The small time-scale CSI table is created and maintained. Content stored in the small time-scale CSI table is defined as differences between actual CSI and large-scale fading parameters corresponding to the large time-scale CSI table.

Prior information related to the meteorological factors mainly includes: atmospheric absorptivity, cloud and rain fading, ionospheric scintillation, and tropospheric scintillation. Based on probability distribution of meteorological related parameters and actually measured values of historical channel fading, differences between actual channel fading and the parameters stored in the large time-scale CSI table are comprehensively calculated, and the small time-scale CSI table is generated accordingly.

Further, different difference-value ranges may be quantified into different difference levels, and granularities may be set based on actual service requirements of beam positions.

203: Perform channel prediction:
calculate a satellite elevation angle of the network device for a beam position to be provided with a service, based on ephemeris and coverage beam position related information of the satellite that carries the network device;
look up the large time-scale CSI table corresponding to the beam position based on an operating frequency and the calculated satellite elevation angle, to obtain channel large-scale fading related parameters of the beam position to be provided with a service;
look up the small time-scale CSI table corresponding to the beam position to obtain difference information between the actually measured parameters of historical channel large-scale fading and the parameters recorded in the corresponding large time-scale CSI table;
perform comprehensive prediction on CSI of the beam position to be provided with a service, based on the difference information obtained above and the parameters related to channel large-scale fading, this comprehensive prediction process may be performed at least through weighted summation, and weights may be at least determined based on the actual service quality in the historical service process;
calculate predicted CSI, i.e. the first CSI parameter set based on an NTN channel model after the predicted large-scale fading information is obtained.

204: Update and maintain the small time-scale CSI table:
update triggering: after the network device broadcasts the predicted CSI, the terminal device receives and demodulates the corresponding CSI. Subsequently, the terminal device compares and determines the broadcast CSI with a CSI measurement result obtained through SSB measurement, to obtain a CSI difference level. In a case where the difference level exceeds the second preset threshold, the terminal device reports the difference level to the network device and requires measurement resources related to accurate CSI measurement. The second preset threshold is at least determined based on requirements for physical channel link margin and data communication quality. For example, a maximum CSI difference that meets the requirements for physical channel link margin and data communication quality is set as the second preset threshold. In a case where the CSI difference level exceeds the maximum CSI difference, the actual communication requirement cannot be met, and accurate CSI measurement is triggered.

Update method: after the at least one selected terminal device for accurate CSI measurement reports the measured CSI, the network device performs smoothing filtering on a reporting result of the at least one selected terminal device to remove the noise impact. Subsequently, the network device may update corresponding information in the small time-scale CSI table at least through the weighted summation, and the weights may be correspondingly set at least based on the method for selecting a terminal device for accurate measurement. For example, if the terminal device for accurate measurement is randomly selected, CSI weights reported by different terminal devices may be set to be equal.

205: Update and maintain the large time-scale CSI table:
Update triggering: in a case where the difference level in the small time-scale CSI table exceeds the first preset threshold, a large time-scale CSI table update timer is turned on. In a case where the difference level in the small time-scale CSI table falls back within an allowable range of the first preset threshold during new measurement, the timer is reset; in a case where the difference level in the small time-scale CSI table still exceeds the first preset threshold during the new measurement, the timer is not reset. When the timer times out, it indicates an irreparable CSI change occurs in the corresponding beam position, so that the update on the large time-scale CSI table is triggered. The first preset threshold and an upper limit of timing of the timer are determined at least based on the meteorological prior information of the corresponding beam position.

Update method: the large time-scale CSI table may be updated at least by performing weighted summation on original CSI parameters in the large time-scale CSI table and corresponding parameters in the updated small time-scale CSI table. The weights may be determined at least based on prior information of proportions of the impacts of the meteorological factors and the geographical factors on the NTN channel.

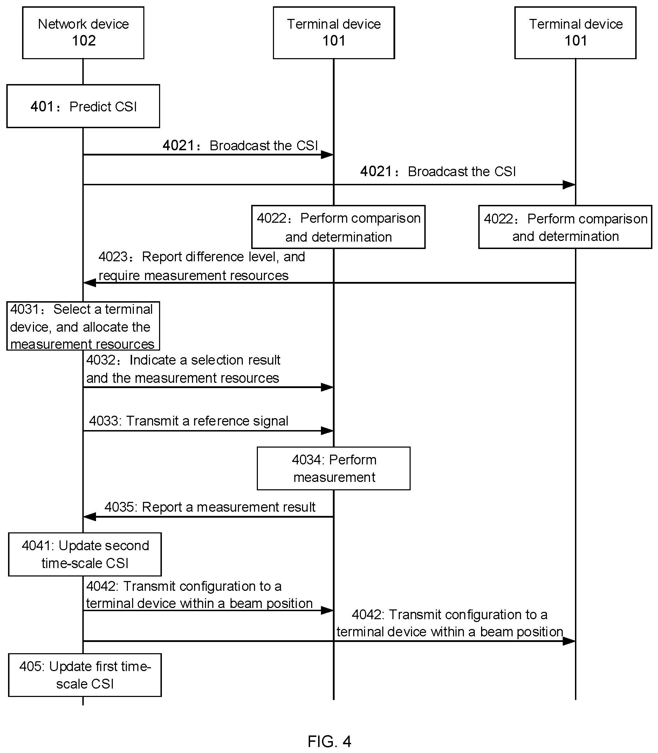

In a specific embodiment of the present disclosure, as shown in FIG. 3, FIG. 3 shows a schematic diagram of setting of a satellite beam position in an NTN scenario. Two terminal devices 101 in FIG. 3 are different terminal devices operating in a same frequency band within the same beam position. Based on first time-scale CSI, second time-scale CSI, and the NTN scenario shown in FIG. 3, a flow of measuring channel state information is shown in FIG. 4, which specifically includes:
401. CSI prediction:
Calculate the first CSI parameter set when a satellite is serving a beam position based on the first time-scale CSI, the second time-scale CSI, ephemeris information and an operating frequency band of the satellite that carries a network device.

A beam position in the present disclosure refers to a current beam position of the satellite. A specific determining process of the first CSI parameter set may refer to the above embodiment, which will not be described in detail here.

402. Rough CSI measurement:
4021: the network device transmits, by broadcasting, the predicted first CSI parameter set to a terminal device located within the beam position, such as the terminal device 101 shown in FIG. 3. The first CSI parameter set may be at least one or more of the following forms: CQI, RSRP, RSRQ, SINR, and codebook, and signaling that carries the broadcast CSI (the first CSI parameter set) may be at least one or more of the following forms: SIB1, SIB19, and other system information (OSI).
4022: The terminal device located within the beam position receives and demodulates the broadcast CSI, compares and determines the broadcast CSI with CSI (i.e. a second CSI parameter set) obtained by measuring an SSB, and obtains a rough CSI difference level.

The broadcast CSI may be at least subtracted from the CSI obtained by measuring the SSB, and a calculation result may be compared with a determination threshold. Based on a comparison result, the broadcast CSI is classified into a corresponding difference level.

4023: In a case where the CSI difference level exceeds a second preset threshold, the terminal device reports the CSI difference level to the network device and requires measurement resources related to accurate CSI measurement.

The second preset threshold may be configured with a plurality of determination thresholds for difference level based on an accuracy requirement, and a difference value between two difference level determination thresholds may be quantified as one difference level.
403. Accurate CSI measurement
4031: After receiving measurement resource requests from different terminal devices within the beam position, for an operating frequency band, the network device selects at least one terminal device (UE) for CSI measurement from terminal devices initiating the measurement resource requests in the operating frequency band. For the at least one selected terminal device for accurate CSI measurement, the network device selects an appropriate configuration from an existing protocol or a newly designed measurement resource configuration set based on the difference level reported by the terminal device.
4032: The network device transmits an accurate-measurement terminal device selection result and a measurement resource configuration to a corresponding terminal device.

Information transmitted by the network device may be carried by at least one or more of downlink control information (DCI), radio resource control (RRC) signaling, and other possible forms.
4033: The network device transmits a reference signal to the corresponding terminal device on a corresponding time-frequency resource based on the measurement resource configuration.
4034: The at least one selected terminal device for accurate CSI measurement receives and measures the corresponding reference signal at a corresponding time-frequency resource position based on received configuration information, and obtains accurately measured CSI, i.e. a third CSI parameter set.
4035: The at least one selected terminal device for accurate CSI measurement reports, based on a CSI reporting rule, a measurement result obtained by accurate CSI measurement to the network device.
404: Update on the second time-scale CSI
4041: The network device comprehensively updates the second time-scale CSI based on the CSI reported by the at least one selected terminal device for accurate CSI measurement.
4042: The network device updates the CSI based on the updated second time-scale CSI and the original first time-scale CSI, and performs corresponding signal transmission configuration based on this information. The network device transmits the configuration to all the terminal devices operating in the same frequency band within the same beam position, to provide services to the terminal devices.
405. Update on the first time-scale CSI

In a case where the CSI difference level indicated by the first time-scale CSI exceeds the first preset threshold and duration of exceeding the threshold times out, the second time-scale CSI is updated based on the first time-scale CSI.

In some embodiments of the present disclosure, to further overall reduce measurement reference signal resource occupation and measurement reporting overheads, for an operating frequency band, the satellite network device selects at least one terminal device from one or more terminal devices reporting measurement resource requests according to at least one of following methods:
(1) random selection: randomly select the at least one terminal device respectively from first target terminal devices within respective operating frequency bands, where the first target terminal devices are the terminal devices reporting the measurement resource requests.
   For example, in a case where the difference levels reported by different terminal devices are significantly different, more terminal devices are selected for measurement.
(2) selection based on historical data: randomly select the at least one terminal device respectively from second target terminal devices within respective operating frequency bands, where the second target terminal devices are terminal devices that report the measurement resource requests and have ever carried out service exchange in the beam position.
(3) selection based on a service demand: select the at least one terminal device respectively from the first target terminal devices within the operating frequency bands based on a data volume required by a service of a terminal device.
   Specifically, for each operating frequency band, the terminal device may be selected at least based on the data volume required by a service of the terminal device. For example, a terminal device with a large service demand is selected for accurate CSI measurement, thus improving service quality of the selected terminal device.
(4) selection based on prior information of probability distribution of the difference levels: select the at least one terminal device from the first target terminal devices within the respective operating frequency bands based on the prior information of probability distribution of the difference levels.

For example, in a case where the probability distribution of the difference levels is uniform distribution, for each operating frequency band, a terminal device for accurate measurement is uniformly selected within each difference level range. In a case where the probability distribution of the difference levels is Gaussian distribution, for each operating frequency band, a small number of terminal devices for accurate measurement are selected within ranges of high difference levels and low difference levels, and a large number of terminal devices for accurate measurement are selected within a range of medium difference levels.

### Second embodiment

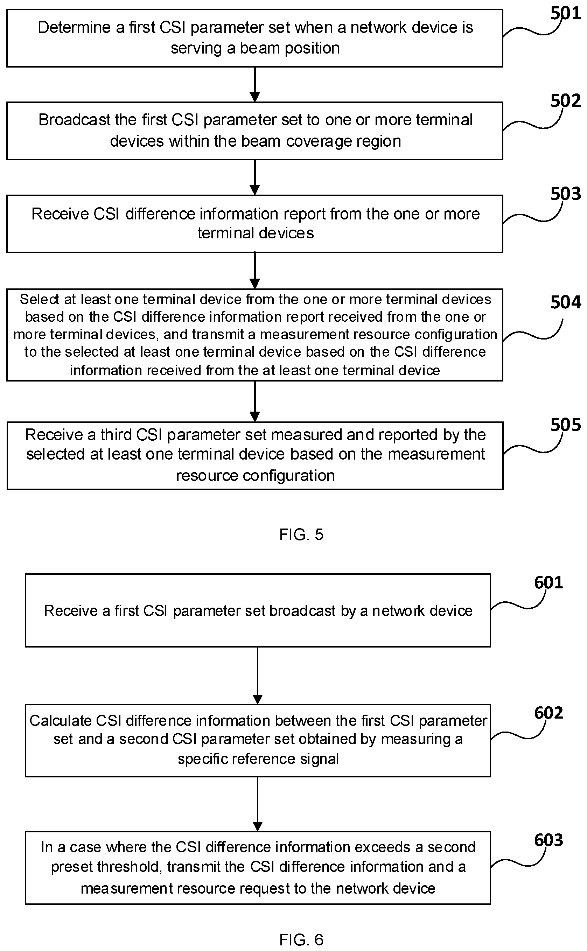

In some embodiments, a method for measuring channel state information applied to a network device side is further provided, as shown in FIG. 5, the method includes:
501: Determine a first CSI parameter set when the network device is serving a beam position.
502: Broadcast the first CSI parameter set to one or more terminal devices within the beam coverage region.
503: Receive CSI difference information report from the one or more terminal devices.

Where the CSI difference information report is determined by the one or more terminal devices based on the first CSI parameter set and a second CSI parameter set obtained by measuring a specific reference signal.

504: Select at least one terminal device from the one or more terminal devices based on the CSI difference information report received from the one or more terminal devices, and transmit a measurement resource configuration to the at least one selected terminal device based on the CSI difference information received from the at least one selected terminal device.

505: Receive a third CSI parameter set measured and reported by the at least one selected terminal device based on the measurement resource configuration.

In some implementations, step 501 of determining the first CSI parameter set when the network device is serving a beam position includes:
calculating, based on first time-scale CSI, second time-scale CSI, ephemeris information and an operating frequency band of a satellite that carries the network device, the first CSI parameter set when the network device provides the service to the beam position.

The first time-scale CSI is determined based on invariant impact of the geographic factor information on channel fading.

The second time-scale CSI is determined based on severe impact of the meteorological factor information on channel fading.

In some implementations, the first time-scale CSI at least includes: prior CSI fading parameters of respective beam coverage regions, respective operating frequency bands and a satellite elevation angle, or levels of the prior CSI fading parameters of the respective beam coverage regions, the respective operating frequency bands and the satellite elevation angle; and/or channel fading probability distribution models of respective beam positions.

The prior CSI fading parameters of respective beam positions, respective operating frequency bands, and the satellite elevation angle are calculated based on geographic factor information and LoS probabilities of respective beam positions, and/or are calculated based on the channel fading probability distribution models of respective beam positions.

The channel fading probability distribution models of respective beam positions are derived based on a channel fading parameter and LoS probability of respective operating frequency bands and a satellite elevation angle that are measured under geographic position information of respective beam positions.

In some implementations, the second time-scale CSI at least includes: differences between historical actually measured CSI fading parameters of respective beam coverage regions, respective operating frequency bands and a satellite elevation angle, and prior CSI fading parameters of the respective beam coverage regions, the respective operating frequency bands and the satellite elevation angle, or difference levels between the historical actually measured CSI fading parameters and the prior CSI fading parameters.

In some implementations, the calculating, based on first time-scale CSI, second time-scale CSI, ephemeris information and an operating frequency band of the satellite that carries the network device, the first CSI parameter set when the network device provides the service to the beam position includes:
calculating a satellite elevation angle based on the ephemeris information of the satellite that carries the network device;
obtaining a target prior CSI fading parameter from the first time-scale CSI based on the beam position, the operating frequency band, and the satellite elevation angle;
obtaining a target difference from the second time-scale CSI based on the beam position, the operating frequency band, and the satellite elevation angle;
predicting large-scale fading information based on the target prior CSI fading parameter and the target difference; and
calculating the first CSI parameter set based on the predicted large-scale fading information and an NTN channel model.

In some implementations, the predicting large-scale fading information based on the target prior CSI fading parameter and the target difference includes:
at least performing weighted summation processing on the target prior CSI fading parameter and the target difference to obtain the large-scale fading information.

In some embodiments of the present disclosure, the method for measuring channel state information applied to the network device side further includes:
updating the second time-scale CSI based on the beam position, an operating frequency band of the at least one selected terminal device, and the third CSI parameter set reported by the at least one selected terminal device;
determining a fourth CSI parameter set based on updated second time-scale CSI, the first time-scale CSI, the ephemeris information and the operating frequency band of the satellite that carries the network device; or determining the fourth CSI parameter set based on the third CSI parameter set reported by the at least one selected terminal device;
determining signal transmission configuration information based on the fourth CSI parameter set; and
transmitting the signal transmission configuration information to terminal devices in the same frequency band within the beam position.

The updating the second time-scale CSI based on the beam position, an operating frequency band of the at least one selected terminal device, and the third CSI parameter set reported by the at least one selected terminal device includes:
performing smoothing filtering processing on the third CSI parameter set reported by the at least one selected terminal device;
at least performing weighted averaging processing on the smoothing filtered CSI parameter set;
determining at least one item to be updated based on the beam position, the operating frequency band of the at least one selected terminal device, and the satellite elevation angle; and
using the weighted averaged CSI parameter set as a historical actually measured CSI fading parameter of the at least one item to be updated, recalculating a difference value of the at least one item to be updated, and updating the at least one item to be updated in the second time-scale CSI by using the difference value of the at least one item to be updated.

In some embodiments of the present disclosure, the method for measuring channel state information applied to the network device side further includes:
triggering timing when a difference or difference level in the second time-scale CSI exceeds a first preset threshold;
resetting timing when the difference or the difference level in the second time-scale CSI is within the first preset threshold; and
in a case where the timing exceeds a preset duration, triggering updating of the first time-scale CSI.

The updating of the first time-scale CSI includes:
at least performing weighted summation processing on data of related items in the first time-scale CSI and data of related items in the second time-scale CSI; and
updating the data of the related items in the first time-scale CSI by using data obtained by performing the weighted summation processing.

In some embodiments of the present disclosure, selecting at least one terminal device from one or more terminal devices reporting measurement resource requests according to at least one of following manners includes:
randomly selecting the at least one terminal device from first target terminal devices within respective operating frequency bands, where the first target terminal devices are terminal devices reporting the measurement resource requests;
randomly selecting the at least one terminal device from second target terminal devices within respective operating frequency bands, where the second target terminal devices are terminal devices that report the measurement resource requests and have ever carried out service exchange in the beam position;
selecting the at least one terminal device from the first target terminal devices within respective operating frequency bands based on data volume required by a service of a terminal device; or
selecting the at least one terminal device from the first target terminal devices within respective operating frequency bands based on prior information of probability distribution of the difference levels.

### Third embodiment

In some embodiments, a method for measuring channel state information applied to a terminal device side is further provided, as shown in FIG. 6, the method includes:
601: Receive a first CSI parameter set broadcast by a network device, where the terminal device is located in a beam coverage region served by the network device.
602: Calculate CSI difference information between the first CSI parameter set and a second CSI parameter set obtained by measuring a specific reference signal.
603: In a case where the CSI difference information exceeds a second preset threshold, transmit the CSI difference information and a measurement resource request to the network device.

On the contrary, in a case where the CSI difference information does not exceed the second preset threshold, the CSI difference information and the measurement resource request do not need to be transmitted to the network device.

The second preset threshold is determined based on a maximum CSI difference that meets requirements for physical channel link margin and data communication quality.

Further, the method for measuring channel state information applied to the terminal device side further includes:
receiving a measurement resource configuration transmitted from the network device; and
performing measurement based on the measurement resource configuration, and transmitting third CSI parameter set report to the network device.

### Fourth embodiment

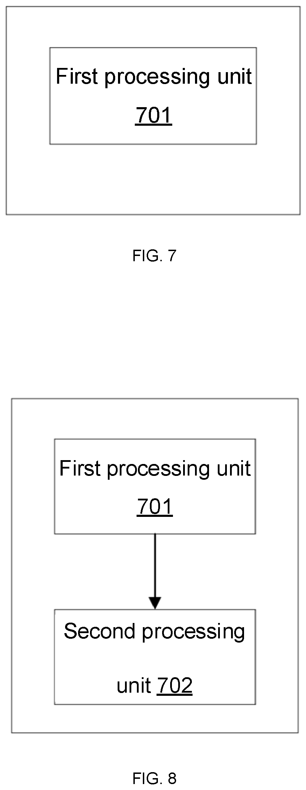

In some embodiments, an apparatus for measuring channel state information applied to a network device side is further provided. As shown in FIG. 7, the apparatus for measuring channel state information applied to the network device side includes a first processing unit 701. The first processing unit 701 is configured to control the network device to perform following operations:
determining a first CSI parameter set when the network device is serving a beam position;
broadcasting the first CSI parameter set to one or more terminal devices within the beam coverage region;
receiving CSI difference information report from the one or more terminal devices, where the CSI difference information report is determined by the one or more terminal devices based on the first CSI parameter set and a second CSI parameter set obtained by measuring a specific reference signal;
selecting at least one terminal device from the one or more terminal devices based on the CSI difference information report received from the one or more terminal devices, and transmitting a measurement resource configuration to the at least one selected terminal device based on the CSI difference information received from the at least one selected terminal device; and
receiving a third CSI parameter set measured and reported by the at least one selected terminal device based on the measurement resource configuration.

In some implementations, the first processing unit 701 determines a first CSI parameter set when the network device is serving a beam position by following operations:
calculating, based on the first time-scale CSI, the second time-scale CSI, ephemeris information and an operating frequency band of a satellite that carries the network device, the first CSI parameter set when the network device provides the service to the beam position.

The first time-scale CSI is determined based on invariant impact of the geographic factor information on channel fading.

The second time-scale CSI is determined based on severe impact of the meteorological factor information on channel fading.

In some implementations, the first time-scale CSI at least includes: prior CSI fading parameters of respective beam coverage regions, respective operating frequency bands and a satellite elevation angle, or levels of the prior CSI fading parameters of the respective beam coverage regions, the respective operating frequency bands and the satellite elevation angle; and/or channel fading probability distribution models of respective beam positions.

The prior CSI fading parameters of respective beam positions, respective operating frequency bands, and the satellite elevation angle are calculated based on geographic factor information and an LoS probabilities of respective beam positions, and/or are calculated based on the channel fading probability distribution models of respective beam positions.

The channel fading probability distribution models of respective beam positions are derived based on a channel fading parameter and LoS probability of respective operating frequency bands and a satellite elevation angle that are measured under geographic position information of respective beam positions.

In some implementations, the second time-scale CSI at least includes: differences between historical actually measured CSI fading parameters of respective beam coverage regions, respective operating frequency bands and a satellite elevation angle, and prior CSI fading parameters of the respective beam coverage regions, the respective operating frequency bands and the satellite elevation angle, or difference levels between the historical actually measured CSI fading parameters and the prior CSI fading parameters.

In some implementations, the first processing unit 701 calculates, based on the first time-scale CSI, the second time-scale CSI, the ephemeris information and the operating frequency band of the satellite that carries the network device, the first CSI parameter set when the network device provides the service to the beam position by following operations:
calculating a satellite elevation angle based on the ephemeris information of the satellite that carries the network device;
obtaining a target prior CSI fading parameter from the first time-scale CSI based on the beam position, the operating frequency band, and the satellite elevation angle;
obtaining a target difference from the second time-scale CSI based on the beam position, the operating frequency band, and the satellite elevation angle;
predicting large-scale fading information based on the target prior CSI fading parameter and the target difference; and
calculating the first CSI parameter set based on the predicted large-scale fading information and an NTN channel model.

In some implementations, the first processing unit 701 predicts large-scale fading information based on the target prior CSI fading parameter and the target difference, which includes:
at least performing weighted summation processing on the target prior CSI fading parameter and the target difference to obtain the large-scale fading information.

In some embodiments of the present disclosure, as shown in FIG. 8, the apparatus for measuring channel state information applied to the network device side further includes a second processing unit 702. The second processing unit 702 is configured to control the network device to perform following operations:
updating the second time-scale CSI based on the beam position, an operating frequency band of the at least one selected terminal device, and the third CSI parameter set reported by the at least one selected terminal device;
determining a fourth CSI parameter set based on updated second time-scale CSI, the first time-scale CSI, the ephemeris information and the operating frequency band of the satellite that carries the network device; or determining the fourth CSI parameter set based on the third CSI parameter set reported by the at least one selected terminal device;
determining signal transmission configuration information based on the fourth CSI parameter set; and
transmitting the signal transmission configuration information to terminal devices in the same frequency band within the beam position.

The updating the second time-scale CSI based on the beam position, an operating frequency band of the at least one selected terminal device, and the third CSI parameter set reported by the at least one selected terminal device includes:
performing smoothing filtering processing on the third CSI parameter set reported by the at least one selected terminal device;
at least performing weighted averaging processing on the smoothing filtered CSI parameter set;
determining at least one item to be updated based on the beam position, the operating frequency band of the at least one selected terminal device, and the satellite elevation angle; and
using the weighted averaged CSI parameter as a historical actually measured CSI fading parameter of the at least one item to be updated, recalculating a difference value of the at least one item to be updated, and updating the at least one item to be updated in the second time-scale CSI by using the difference value of the at least one item to be updated.

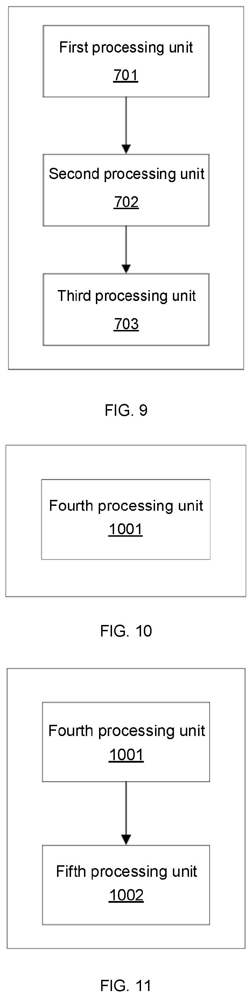

In some embodiments of the present disclosure, as shown in FIG. 9, the apparatus for measuring channel state information applied to the network device side further includes a third processing unit 703. The third processing unit 703 is configured to control the network device to perform following operations:
triggering timing when a difference or difference level in the second time-scale CSI exceeds a first preset threshold;
resetting timing when the difference or the difference level in the second time-scale CSI is within the first preset threshold; and
in a case where the timing exceeds a preset duration, triggering updating of the first time-scale CSI.

The updating of the first time-scale CSI includes:
at least performing weighted summation processing on data of related items in the first time-scale CSI and data of related items in the second time-scale CSI; and
updating the data of the related items in the first time-scale CSI by using data obtained by performing the weighted summation processing.

In some embodiments of the present disclosure, the first processing unit 701 is configured to control the network device to perform following operations:
selecting at least one terminal device from one or more terminal devices reporting measurement resource requests by at least one of following manners: randomly selecting the at least one terminal device from first target terminal devices within respective operating frequency bands, where the first target terminal devices are terminal devices reporting the measurement resource requests;
randomly selecting the at least one terminal device from second target terminal devices within respective operating frequency bands, where the second target terminal devices are terminal devices that report the measurement resource requests and have ever carried out service exchange in the beam position;
selecting the at least one terminal device from the first target terminal devices within the respective operating frequency bands based on data volume required by a service of a terminal device; or
selecting the at least one terminal device from the first target terminal devices within the respective operating frequency bands based on prior information of probability distribution of the difference levels.

It should be noted that, the above only describes the components or modules related to the present disclosure, but the present disclosure is not limited to them. The apparatus for measuring channel state information applied to the network device side in the embodiments of the present disclosure may further include other components or modules. Specific description of these components or modules may refer to the related technology.

In addition, for the sake of simplicity, FIGS. 7-9 only exemplarily show connection relationships or signal directions among the components or modules. However, those skilled in the art should be aware that various related technologies such as bus connection may be used. The above components or modules may be implemented through hardware facilities such as a processor, a memory, a transmitter, or a receiver, which is not limited in the present disclosure.

The above embodiments only provide exemplary explanations for the embodiments of the present disclosure, but the present disclosure is not limited thereto. Appropriate transformations may also be made based on the above embodiments. For example, the above embodiments can be used separately, or one or more of the above embodiments may be combined.

### Fifth embodiment

In some embodiments, an apparatus for measuring channel state information applied to a terminal device side is further provided. As shown in FIG. 10, the apparatus for measuring channel state information applied to the terminal device side includes a fourth processing unit 1001. The fourth processing unit 1001 is configured to control the terminal device to perform following operations:
receiving a first CSI parameter set broadcast by a network device, where the terminal device is located in a beam coverage region served by the network device;
calculating CSI difference information between the first CSI parameter set and a second CSI parameter set obtained by measuring a specific reference signal; and
in a case where the CSI difference information exceeds a second preset threshold, transmitting the CSI difference information and a measurement resource request to the network device.

In a further embodiment, as shown in FIG. 11, the apparatus for measuring channel state information applied to the terminal device side further includes a fifth processing unit 1002. The fifth processing unit 1002 is configured to control the terminal device to perform following operations:
receiving a measurement resource configuration transmitted from the network device; and performing measurement based on the measurement resource configuration, and transmitting third CSI parameter set report to the network device.

Specifically, a corresponding reference signal is received and measured at a corresponding time-frequency resource position based on the measurement resource configuration; accurately measured CSI is obtained based on the reference signal; and a measurement result obtained by accurate CSI measurement is reported to the network device based on a CSI reporting rule.

It should be noted that, the above only describes the components or modules related to the present disclosure, but the present disclosure is not limited thereto. The apparatus for measuring channel state information applied to the terminal device side in the embodiments of the present disclosure may further include other components or modules. Specific description of these components or modules may refer to the related technology.

In addition, for the sake of simplicity, FIG. 10 and FIG. 11 only exemplarily show connection relationships or signal directions among the components or modules. However, those skilled in the art should be aware that various related technologies such as bus connection may be used. The above components or modules may be implemented through hardware facilities such as a processor, a memory, a transmitter, or a receiver, which is not limited in the present disclosure.

The above embodiments only provide exemplary explanations for the embodiments of the present disclosure, but the present disclosure is not limited thereto. Appropriate transformations may also be made based on the above embodiments. For example, the above embodiments may be used separately, or one or more of the above embodiments may be combined.

An existing measurement mechanism obtains the CSI through frequent reference signal measurement and measurement result reporting, which occupies a large number of time-frequency resources and is not suitable for an NTN scenario. The present disclosure designs a novel dual-time-scale CSI prediction and measurement update method based on the periodicity and predictability of the covering beam position of network device, a small coverage range and short coverage time of each beam position, and an NTN channel characteristic of an NTN channel that is dominated by an LoS path and large-scale fading. CSI is bound to a specific beam position. Through CSI prediction, dual-time-scale CSI table maintenance, and CSI multiplexing of a plurality of terminals within the beam position, a CSI measurement frequency is reduced, reference signal time-frequency resource occupation is reduced, and measurement result reporting overheads are reduced. In addition, the present disclosure overall further reduces measurement and reporting overheads through CSI multiplexing between different terminals operating in the same frequency band within the same beam position.

An embodiment of the present disclosure further provides a terminal device, but the present disclosure is not limited to this and may provide other devices.

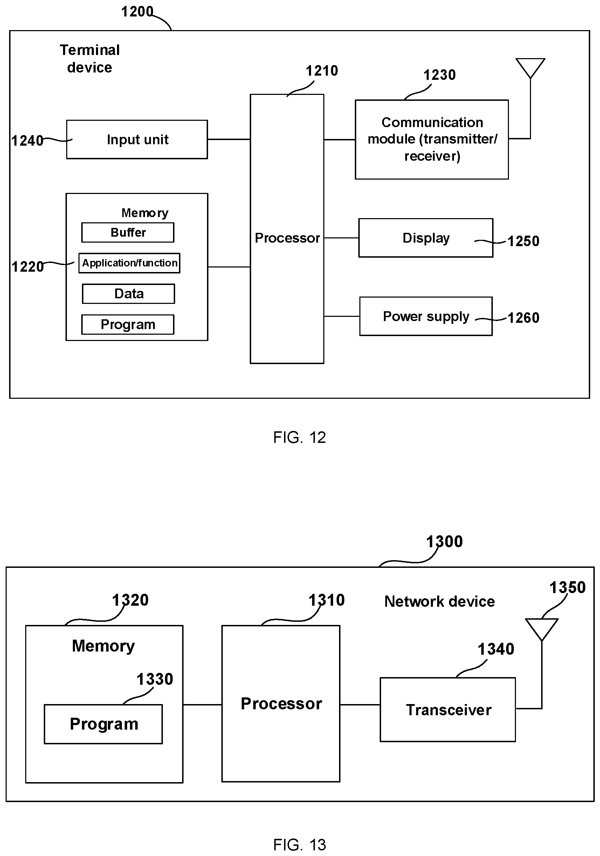

FIG. 12 is a schematic diagram of a terminal device according to an embodiment of the present disclosure. As shown in FIG. 12, the terminal device 1200 may include a processor 1210 and a memory 1220. The memory 1220 stores data and programs therein and is coupled to the processor 1210. It is worth noting that this figure is exemplary. Other types of structures may be used to supplement or replace this structure, to achieve a telecommunication function or other functions.

For example, the processor 1210 may be configured to execute a program to implement a method for measuring channel state information applied to a terminal device side.

As shown in FIG. 12, the terminal device 1200 may further include a communication module 1230, an input unit 1240, a display 1250, and a power supply 1260. Functions of the above components are similar to those of the existing technology, and will not be elaborated herein. It is worth noting that, the terminal device 1200 does not necessarily have to include all the components shown in FIG. 12, and the above components are not necessary. In addition, the terminal device 1200 may further include components not shown in FIG. 12, which may refer to the existing technology.

An embodiment of the present disclosure further provides a network device, such as a base station, but the present disclosure is not limited to this and may further provide other network devices.

FIG. 13 is a schematic diagram of a network device according to an embodiment of the present disclosure. As shown in FIG. 13, the network device 1300 may include a processor 1310 (such as a central processing unit (CPU)) and a memory 1320. The memory 1320 is coupled to the processor 1310. The memory 1320 can store various data and a program 1330 for information processing. Furthermore, the program 1330 is executed under the control of the processor 1310.

For example, the processor 1310 may be configured to execute a program to implement a method for measuring channel state information applied to a network device side.

In addition, as shown in FIG. 13, the network device 1300 may further include a transceiver 1340 and an antenna 1350. Functions of the above components are similar to those of the existing technology, and will not be elaborated here. It is worth noting that the network device 1300 does not necessarily have to include all the components shown in FIG. 13. In addition, the network device 1300 may further include components not shown in FIG. 13, which may refer to the existing technology.

An embodiment of the present disclosure further provides a computer-readable program. When the program is executed in a network device, causes a computer to perform, in the network device, the above method for measuring channel state information applied to the network device side, i.e. the method of the second embodiment.

An embodiment of the present disclosure further provides a storage medium storing a computer-readable program therein. When the computer-readable program causes a computer to perform, in a network device, the above method for measuring channel state information applied to the network device side, i.e. the method of the second embodiment.

An embodiment of the present disclosure further provides a computer-readable program. When the program is executed in a terminal device, causes a computer to perform, in the terminal device, the above method for measuring channel state information applied to the terminal device side, i.e. the method of the third embodiment.

An embodiment of the present disclosure further provides a storage medium storing computer-readable program therein. When the computer-readable program causes a computer to perform, in a terminal device, the above method for measuring channel state information applied to the terminal device side, i.e. the method of the third embodiment.

The above apparatus and methods in the present disclosure may be implemented by hardware or by a combination of hardware and software. The present disclosure relates to a computer-readable program that, when executed by a logic component, may cause the logic component to implement the apparatus or constituting components described above, or to implement the various methods or steps described above. The logic component may be, for example, a field programmable logic component, a microprocessor, a processor used in a computer, and the like. The present disclosure further relates to a storage medium for storing the above programs, such as a hard disk drive, a magnetic disk, an optical disk, a digital video disk (DVD), or a flash memory.

The method/apparatus described in the embodiments of the present disclosure may be directly embodied as hardware, software modules executed by a processor, or a combination of hardware and software. For example, one or more functional block diagrams shown in the figures and/or one or more combinations of the functional block diagrams may correspond to various software modules of a computer program flow, and can also correspond to various hardware modules. These software modules may respectively correspond to the steps shown in the figure. These hardware modules may be implemented by solidifying these software modules by using, for example, a field programmable gate array (FPGA).

The software modules may be located in a random access memory (RAM), a flash memory, a read-only memory (ROM), an erasable programmable read-only memory (EPROM), an electrically erasable programmable read-only memory (EEPROM), a register, a hard disk drive, a mobile disk, a compact disc (CD)-ROM, or any other forms of storage media known in the art. A storage medium can be coupled to a processor, so that the processor can read information from and write information to the storage medium; or, the storage medium may be a component of the processor. The processor and the storage medium may be located in an application specific integrated circuit (ASIC). The software modules may be stored in a memory of a mobile terminal or in a storage card that can be inserted into the mobile terminal. For example, if a device (such as a mobile terminal) uses a high-capacity MEGA-SIM card or a high-capacity flash memory device, the software modules may be stored in the MEGA-SIM card or the high-capacity flash memory device.

One or more functional blocks described in the accompanying drawing and/or one or more combinations of the functional blocks may be implemented as a general-purpose processor, a digital signal processor (DSP), an ASIC, a field programmable gate array (FPGA), or another programmable logical device, a discrete gate or transistor logical device, a discrete hardware component, or any proper combination that is configured to perform the functions described in the present disclosure. One or more functional blocks described in the accompanying drawing and/or one or more combinations of the functional blocks may also be implemented as a combination of computing devices, such as a combination of a DSP and a microprocessor, a plurality of microprocessors, one or more microprocessors communicating with a DSP, or any other similar configurations.

The present disclosure is described above in conjunction with the specific implementations, but a person skilled in the art should know that these descriptions are exemplary and are not intended to limit the protection scope of the present disclosure. A person skilled in the art can make various transformations and changes to the present disclosure based on the spirit and principle of the present disclosure, and these transformations and changes also fall within the scope of the present disclosure.

## Claims

1. An apparatus for measuring channel state information, applied to a network device, wherein the apparatus comprises a first processing unit; and the first processing unit is configured to control the network device to perform following operations:
determining a first channel state information (CSI) parameter set when the network device is serving a beam coverage region;
broadcasting the first CSI parameter set to one or more terminal devices within the beam coverage region;
receiving CSI difference information report from the one or more terminal devices, wherein the CSI difference information report is determined by the one or more terminal devices based on the first CSI parameter set and a second CSI parameter set obtained by measuring a specific reference signal;
selecting at least one terminal device from the one or more terminal devices based on the CSI difference information report received from the one or more terminal devices, and transmitting a measurement resource configuration to the selected at least one terminal device based on CSI difference information received from the at least one terminal device; and
receiving a third CSI parameter set measured and reported by the selected at least one terminal device based on the measurement resource configuration.

2. The apparatus according to claim 1, wherein the determining a first CSI parameter set when the network device is serving a beam coverage region comprises:
calculating, based on first time-scale CSI, second time-scale CSI, ephemeris information and an operating frequency band of a satellite that carries the network device, the first CSI parameter set when the network device is serving the beam coverage region;
wherein the first time-scale CSI is determined based on invariant impact of geographic factor information on channel fading; and
the second time-scale CSI is determined based on severe impact of meteorological factor information on channel fading.

3. The apparatus according to claim 2, wherein the first time-scale CSI at least comprises: prior CSI fading parameters of respective beam coverage regions, respective operating frequency bands and a satellite elevation angle, or levels of the prior CSI fading parameters of the respective beam coverage regions, the respective operating frequency bands and the satellite elevation angle; and/or channel fading probability distribution models of respective beam coverage regions;
wherein the prior CSI fading parameters of respective beam coverage regions, respective operating frequency bands, and the satellite elevation angle are calculated based on geographic factor information and line of sight (LoS) probabilities of respective beam coverage regions, and/or are calculated based on the channel fading probability distribution models of respective beam coverage regions; and
wherein the channel fading probability distribution models of respective beam coverage regions are derived based on channel fading parameters and LoS probabilities of respective operating frequency bands and a satellite elevation angle that are measured under geographic position information of respective beam coverage regions.

4. The apparatus according to claim 2, wherein the second time-scale CSI at least comprises: differences between historical actually measured CSI fading parameters of respective beam coverage regions, respective operating frequency bands and a satellite elevation angle, and prior CSI fading parameters of the respective beam coverage regions, the respective operating frequency bands and the satellite elevation angle, or difference levels between the historical actually measured CSI fading parameters and the prior CSI fading parameters.

5. The apparatus according to claim 2, wherein the calculating, based on first time-scale CSI, second time-scale CSI, ephemeris information and an operating frequency band of a satellite that carries the network device, the first CSI parameter set when the network device is serving the beam coverage region comprises:
calculating a satellite elevation angle based on the ephemeris information of the satellite that carries the network device;
obtaining a target prior CSI fading parameter from the first time-scale CSI based on the beam coverage region, the operating frequency band, and the satellite elevation angle;
obtaining a target difference from the second time-scale CSI based on the beam coverage region, the operating frequency band, and the satellite elevation angle;
predicting large-scale fading information based on the target prior CSI fading parameter and the target difference; and
calculating the first CSI parameter set based on the large-scale fading information and a non terrestrial network (NTN) channel model.

6. The apparatus according to claim 5, wherein the predicting large-scale fading information based on the target prior CSI fading parameter and the target difference comprises:
at least performing weighted summation processing on the target prior CSI fading parameter and the target difference to obtain the large-scale fading information.

7. The apparatus according to any one of claims 2 to 6, wherein the apparatus further comprises a second processing unit; and the second processing unit is configured to control the network device to perform following operations:
updating the second time-scale CSI based on the beam coverage region, an operating frequency band of the selected at least one terminal device, and the third CSI parameter set reported by the selected at least one terminal device;
determining a fourth CSI parameter set based on the updated second time-scale CSI, the first time-scale CSI, the ephemeris information and the operating frequency band of the satellite that carries the network device; or determining the fourth CSI parameter set based on the third CSI parameter set reported by the selected at least one terminal device;
determining signal transmission configuration information based on the fourth CSI parameter set; and
transmitting the signal transmission configuration information to terminal devices in a same frequency band within the beam coverage region.

8. The apparatus according to claim 7, wherein the updating the second time-scale CSI based on the beam coverage region, an operating frequency band of the at least one terminal device, and the third CSI parameter set reported by the selected at least one terminal device comprises:
performing smoothing filtering processing on the third CSI parameter set reported by the selected at least one terminal device;
at least performing weighted averaging processing on the smoothing filtered CSI parameter set;
determining at least one item to be updated based on the beam coverage region, the operating frequency band of the selected at least one terminal device, and the satellite elevation angle; and
using the weighted averaged CSI parameter as a historical actually measured CSI fading parameter of the at least one item to be updated, recalculating a difference value of the at least one item to be updated, and updating the at least one item to be updated in the second time-scale CSI by using the difference value of the at least one item to be updated.

9. The apparatus according to claim 7, wherein the apparatus further comprises a third processing unit, and the third processing unit is configured to control the network device to perform following operations:
triggering timing when a difference or difference level in the second time-scale CSI exceeds a first preset threshold;
resetting timing when the difference or the difference level in the second time-scale CSI is within the first preset threshold; and
in a case where the timing exceeds a preset duration, triggering updating of the first time-scale CSI.

10. The apparatus according to claim 9, wherein the updating of the first time-scale CSI comprises:
at least performing weighted summation processing on data of related items in the first time-scale CSI and the second time-scale CSI; and
updating the data of the related items in the first time-scale CSI by using data obtained by performing the weighted summation processing.

11. The apparatus according to any one of claims 1 to 10, wherein the first processing unit is configured to control the network device to perform following operations:
selecting the at least one terminal device from the one or more terminal devices that report measurement resource requests by at least one of following manners:
randomly selecting the at least one terminal device from first target terminal devices within respective operating frequency bands, wherein the first target terminal devices are terminal devices that report the measurement resource requests;
randomly selecting the at least one terminal device from second target terminal devices within the respective operating frequency bands, wherein the second target terminal devices are terminal devices that report the measurement resource requests and have ever carried out service exchange in the beam coverage region;
selecting the at least one terminal device from the first target terminal devices within the respective operating frequency bands based on data volume required by a service of a terminal device; or
selecting the at least one terminal device from the first target terminal devices within the respective operating frequency bands based on prior information of probability distribution of difference levels.

12. An apparatus for measuring channel state information, applied to a terminal device, wherein the apparatus comprises a fourth processing unit, and the fourth processing unit is configured to control the terminal device to perform following operations:
receiving a first channel state information (CSI) parameter set broadcast by a network device, wherein the terminal device is located in a beam coverage region served by the network device;
calculating CSI difference information between the first CSI parameter set and a second CSI parameter set obtained by measuring a specific reference signal; and
in a case where the CSI difference information exceeds a second preset threshold, transmitting the CSI difference information and a measurement resource request to the network device.

13. The apparatus according to claim 12, wherein the apparatus further comprises a fifth processing unit, and the fifth processing unit is configured to control the terminal device to perform following operations:
receiving a measurement resource configuration transmitted from the network device; and
performing measurement based on the measurement resource configuration, and transmitting third CSI parameter set reporting to the network device.

14. A method for measuring channel state information, applied to a network device, comprising:
determining a first channel state information (CSI) parameter set when the network device is serving a beam coverage region;
broadcasting the first CSI parameter set to one or more terminal devices within the beam coverage region;
receiving CSI difference information report from the one or more terminal devices, wherein the CSI difference information report is determined by the one or more terminal devices based on the first CSI parameter set and a second CSI parameter set obtained by measuring a specific reference signal;
selecting at least one terminal device from the one or more terminal devices based on the CSI difference information report received from the one or more terminal devices, and transmitting a measurement resource configuration to the selected at least one terminal device based on the CSI difference information received from the selected at least one terminal device; and
receiving a third CSI parameter set measured and reported by the selected at least one terminal device based on the measurement resource configuration.

15. A method for measuring channel state information, applied to a terminal device, comprising:
receiving a first channel state information (CSI) parameter set broadcast by a network device, wherein the terminal device is located in a beam coverage region served by the network device;
calculating CSI difference information between the first CSI parameter set and a second CSI parameter set obtained by measuring a specific reference signal; and
in a case where the CSI difference information exceeds a second preset threshold, transmitting the CSI difference information and a measurement resource request to the network device.

16. The method according to claim 15, further comprising:
receiving a measurement resource configuration transmitted from the network device; and
performing measurement based on the measurement resource configuration, and transmitting third CSI parameter set reporting to the network device.

17. A network device, comprising a processor and a memory, wherein the memory stores a program therein, and the processor is configured to implement, when executing the program, the method for measuring channel state information according to claim 14.

18. A terminal device, comprising a processor and a memory, wherein the memory stores a program therein, and the processor is configured to implement, when executing the program, the method for measuring channel state information according to claim 15 or 16.

19. A computer-readable storage medium, storing a computer-readable program therein, wherein the computer-readable program, when executed by a processor of a computer, implements the method for measuring channel state information according to any one of claims 14 to 16.
